# EUROPEAN PATENT SPECIFICATION

(11) **EP 2 713 141 B1**
(45) Date of publication and mention of the grant of the patent: **28.09.2016**
(21) Application number: 13180113.6
(22) Date of filing: 12.08.2013
(51) Int. Cl.: G01D 5/14, G01D 11/24

(54) **Explosion-proof magnetic transducer**
Explosionsgeschützter magnetischer Sensor
Capteur magnétique protégé contre les explosions

(30) Priority: 26.09.2012 IT TO20120832
(43) Date of publication of application: 02.04.2014
(73) Proprietor: Elcis Encoder S.R.L., 10093 Collegno (TO) (IT)
(72) Inventor: Battaglino, Andrea, 10093 COLLEGNO (TO) (IT); Battaglino, Riccardo, 10093 COLLEGNO (TO) (IT)
(74) Representative: Robba, Pierpaolo

(56) References cited:
- EP-A1- 1 345 005
- DE-U1-202006 003 348
- JP-A- H11 153 404
- US-A1- 2001 048 254
- US-A1- 2008 245 144

## Description

### Field of the Invention

The present invention relates to an explosion-proof magnetic transducer.

More particularly, the invention is directed to an explosion-proof incremental or absolute transducer device, commonly known as encoder, of the magnetic, digital or analogical type.

The transducer according to the invention finds application especially in environments with potentially explosive atmosphere due to the presence of gases or powders.

### Prior Art

Explosion-proof encoders intended for use in environments with potentially explosive atmosphere due to the presence of gases or powders must comply with norm 'ATEX' EN 60079, which establishes the general requirements for protecting apparatuses used in potentially explosive atmospheres due to the presence of gases or powders.

The 'ATEX' norm corresponding to each type of protection applicable to explosion-proof encoders is presently identified by a letter as follows:
- "o" for the immersion in oil according to norm EN 60079-6;
- "p" for the internal overpressure according to norm EN 60079-2;
- "d" for explosion-proof casings according to norm EN 60079-1 (this being the most used norm for explosion-proof encoders);
- "e" for increased safety according to norm EN 60079-7;
- "ia" or "ib" for intrinsic safety according to norm EN 60079-11.

In the present state of the art, explosion-proof encoders that have to comply with the aforesaid norm are particularly complicated and expensive.

Available on the market are contactless magnetic rotary encoders of the normal type, i.e. not homologated for use in environments with explosion risk, consisting of a rotor provided with alternate magnetic poles and of a magnetic sensor. Typically the sensor of magnetic encoders incorporates in a single device both the magnetic sensor and the electronics for signal amplification.

As the electronics for signal amplification absorbs much electric power and consequently dissipates a remarkable amount of heat, in order to comply with the requirements of norm EN 60079, and particularly of norm EN 60079-1 for the type of protection "d", the casings of the magnetic sensors must be made with appropriate volumes, depending on the Watts of power dissipated by the electronics, and the walls of the casings must have a thickness of at least 3 - 4 mm and be sealed by means of suitable sealing joints.

On the other hand, the good working of the contactless magnetic encoder depends on the fact that the distance between the sensor and the rotor is small, typically comprised between 0.4 e 2.6 mm and therefore it is impossible to use the aforesaid casings because of the excessive wall thickness that would hinder the good working of the transducer.

US 2001/048254 discloses an explosion-proof magnetic transducer comprising the features of the preamble of claim 1.

The main object of the present invention is therefore to overcome the drawbacks of the prior art and to provide a transducer of the aforementioned type that is compatible with the operation features of magnetic sensors and meets the requirements set forth in the norms concerning explosion-proof devices, especially in norm EN 60079.

Another object of the invention is to provide a magnetic transducer that may be used in several applications where there exists a risk of explosion, for measuring quantities associated to either a circular or a rectilinear motion.

A not least object of the invention is to provide an explosion-proof magnetic transducer that may be industrially manufactured at low costs.

### Summary of the Invention

These and other objects are achieved by the transducer according to the invention as defined in the appended claims.

Advantageously, according to the invention there is provided to separate the magnetic sensor, usually made by a magneto-resistance or a Hall effect sensor or by any device capable of sensing the variation of a magnetic flux and having low power absorption and low feeding voltage, typically lower than 5 V, from the rest of the electronics, the power absorption of which is, as is known, several Watts and the feeding voltage of which can be, depending on the user's needs, even 30 V.

Advantageously, thanks to the arrangement according to the invention and to the very low power absorption and feeding voltage of the magnetic sensor unit it is possible to realize an explosion-proof transducer complying with norm 'ATEX' according to two different possibilities:
(A) by means of an explosion-proof casing according to norm EN 60079-1, wherein the protection gap can be brought for instance to approximately 0,5 / 0,6 mm remaining within the specifications of the aforesaid norm (low impact resistance equal to 4J as per norm EN 60079-0);
(B) by means of self-certification of intrinsic protection, according to norm EN 60079-11, allowing to eliminate the expensive and burdensome needs for CE Certification and Product Notice.

Still according to the invention, there will be further advantages deriving from the longer useful life of the transducer, from the simplicity and flexibility of installation, from the high reliability in hostile environments and from the high resolution, several thousand of pulses per revolution, at low costs.

### Brief Description of the Drawings

Some preferred embodiments of the invention will be provided by way of non-limiting examples with reference to the attached drawings, in which:
- Fig. 1 is a block scheme of the encoder according to the invention;
- Fig. 2 is a front view, partially in section, of the sensor unit of a first embodiment;
- Fig. 3 is a side view, partially in section along line B-B, of the sensor unit of Fig.2;
- Fig. 4 is a plan view of the magnetic ring;
- Fig. 5 is a side view of the magnetic ring of Fig. 4;
- Fig. 6 is a side view, partially in section, of the control unit;
- Fig. 7 is a front view, partially in section, of the sensor unit according to a second embodiment;
- Fig. 8 is a front view, partially in section, of the sensor unit according to a third embodiment;
- Fig. 9 is a front view, partially in section, of the sensor unit according to a fourth embodiment;
- Fig. 10 is a front view, partially in section, of the sensor unit according to a fifth embodiment.

### Description of Preferred Embodiments

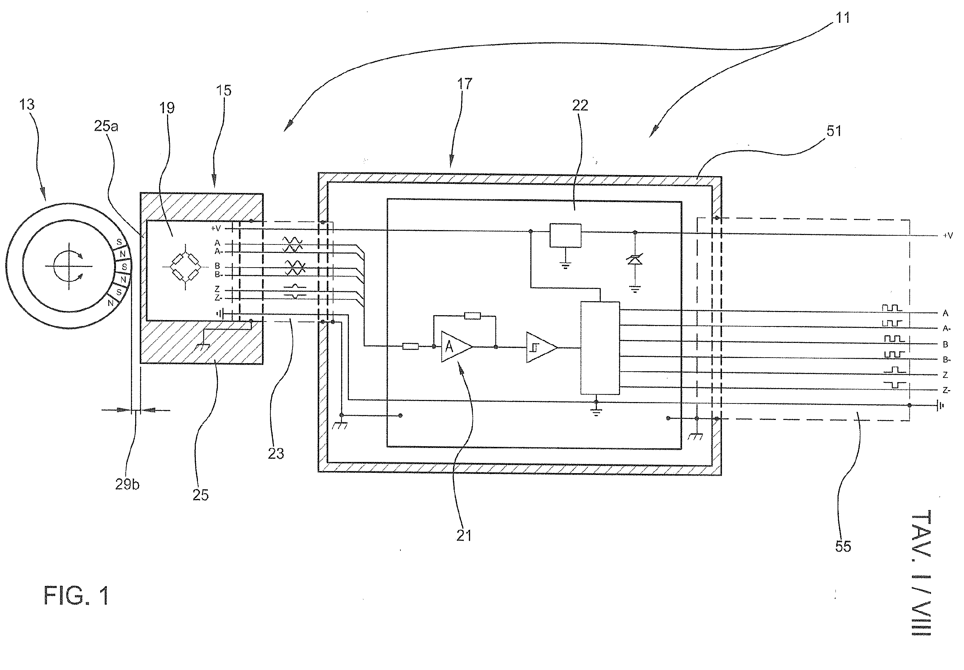

With reference to Fig. 1, according to the invention, the explosion-proof magnetic transducer, identified as a whole with reference numeral 11, comprises a magnetic unit 13, a sensor unit 15 and an electronic control unit 17.

The magnetic unit 13 is associatable to a body moving circularly or rectilinearly, such as a sliding carriage of a machine tool, or according to a combination of said movements.

The sensor unit 15 comprises a detector device 19 capable of causing the variation of at least one electrical quantity in an electric signal passing through said device, upon variation of the magnetic flux of a surrounding magnetic field.

Said detector device 19 can be for instance made by a magneto-resistive head or Hall effect head or potentially by any device sensitive to magnetic flux variations.

According to the invention, the detector device 19 will preferably be a device with low power absorption (for instance max 100 mW) and low feeding voltage (for instance max 5V).

Advantageously, thanks to this condition the amount of heat dissipated by the device will be small and the unit 15 will comply with norm 'ATEX' "d" provided for explosion-proof devices.

The electronic control unit 17 comprises an amplifier 21 of the amplitude of the electric signal passing through the sensor unit 15.

According to the invention, when the transducer 11 is working the electric power absorbed by said sensor unit 15 is lower than the one absorbed by said electronic control unit 17. Unit 17 typically absorbs a few Watts of electric power with a feeding voltage that can be for instance as high as 30 V.

Said sensor unit 15 and said electronic control unit 17 are advantageously separate from each other and are connected by an electric cable 23.

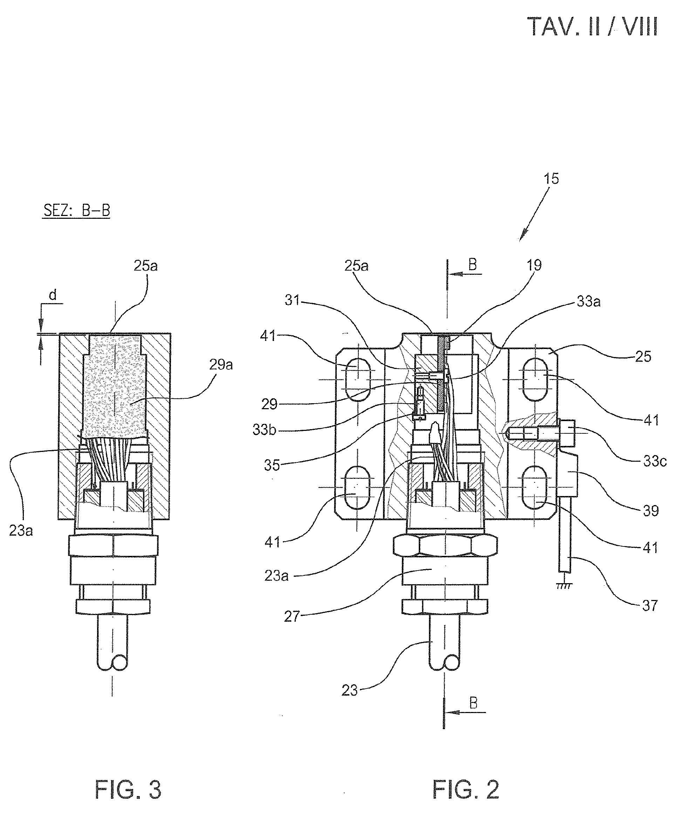

With reference to Figs. 1, 2 and 3 the sensor unit 15 is housed in a casing 25 from where the cable 23 connecting the electronic control unit 17 comes out.

According to the invention, the cable 23 is of the type homologated for use in dangerous areas with explosion risk and comes out from the casing 25 through a cable clamp 27 certified for use in dangerous areas for the presence of potentially explosive gases or powders. The threading and the tightening torque of the cable clamp 27 will comply with the norm 'ATEX' in force with respect to explosion-proof devices.

According to the invention the wall of said casing 25, at the head of the detector device 19, has a thickness such that the distance "d" of the head of the sensor device 19 from the external face 25a of said wall is small and lower than 1.0 mm and preferably comprised between about 0.5 ÷ 0.6 mm. According to the invention, the remaining walls of the casing 25 will preferably have a thickness of a few millimeters, for instance 3-5 mm and a portion with reduced thickness will be provided at the detector device 19 only, in order to allow said device to work correctly upon variation of the magnetic field generated by the unit 13.

Inside the casing 25 there is received a printed circuit board 29 on which the detector device 19 is mounted for reading the magnetic poles that are present on the magnetic unit.

Those terminals of the conductors of the cable 23 that end inside the casing 25 are soldered to the tracks of the printed circuit board 29, which in turn is attached, by means of a screw 33a, to a cylindrical support 31 made of insulating material.

The cylindrical support 31 to which the printed circuit board 29 is attached is fixed inside the casing 25 by means of an eccentric head screw 33b engaging into a groove 35 provided inside the casing 25.

The metal sheath 23a of cable 23 is connected by soldering to the body of the casing 25 which is equipped with a grounding cable 37 having a cable terminal 39 attached to the casing 25 by means of screw 33c. The grounding cable 37 ensures mass continuity of the casing 25 with the common grounding as established by norm 'ATEX'.

The detector device 19 arranged inside the casing 25 of the sensor unit 15 generates electric signals, typically sinusoidal, which, through the cable 23, are transferred to the unit 17 containing the amplifying electronics.

The volume inside the casing 25 is preferably filled with hardenable insulating material 29a, for instance an epoxy or silicone or polyurethane resin or other suitable binders/resins, to protect the printed circuit board 29 and the detector device 19 against shocks, vibrations and possible condensation phenomena. Advantageously, thanks to this measure, the unit 15 is capable of standing the shock test of low mechanical risk (4J) required by norm 'ATEX'.

The above-described unit 15 may be placed by the user in an area with potentially explosive atmosphere for the presence of gases or powders and fixed in the proximity of the rotating member, for instance a motor shaft, to be controlled, to which the magnetic unit 13 is associated, with a gap 29b between the wall 25a and the magnetic unit 13 comprised between about 1 and 2 mm by means of screws passing through holes 41 provided on the casing 25.

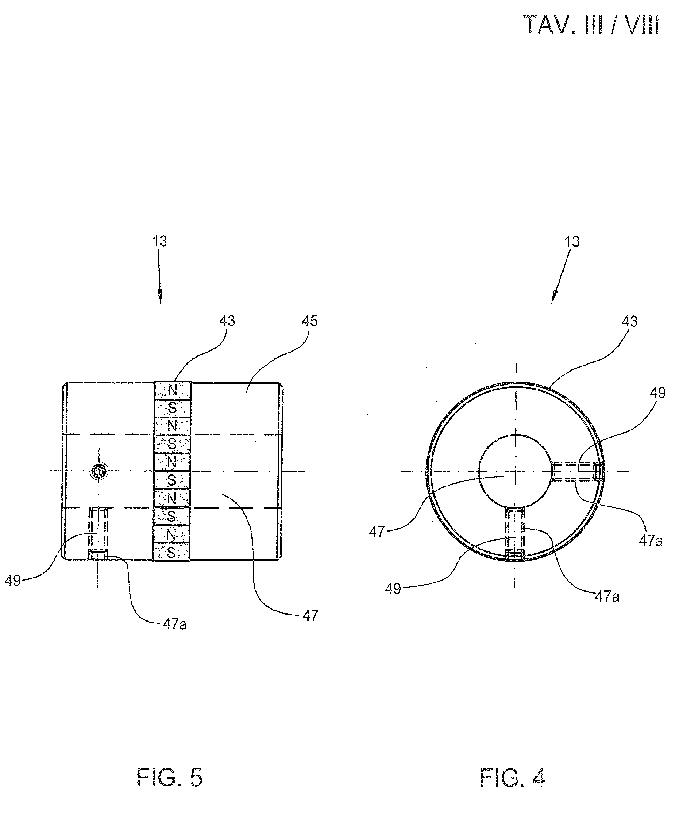

With reference to Figs. 4 and 5 there is illustrated an embodiment of a magnetic ring 43, magnetized with equally alternated N/S poles.

The ring 43 may be made for instance of ferrite or vulcanized magnetic rubber and may be associated to an amagnetic metal or plastic support 45, for instance of aluminum, plastics, amagnetic inox steel, brass, bronze, etc., in order to be fitted onto the motor shaft, rotating member or sliding member, the movement of which is to be controlled by the transducer 11. The support 45 is further provided with an axial central through-hole 47 for the rotating shaft as well as with radial holes 47a for blocking pegs 49 by means of which the support 45 can be attached to said shaft.

Still according to the invention, the ring 43 may be a magnetic gear, a magnetic band or the like, magnetized with equally alternated N/S poles. In the last case, the magnetic band or the like may be arranged also in straight line and the transducer 11 may be used for controlling linear displacement members, such as sliding carriages.

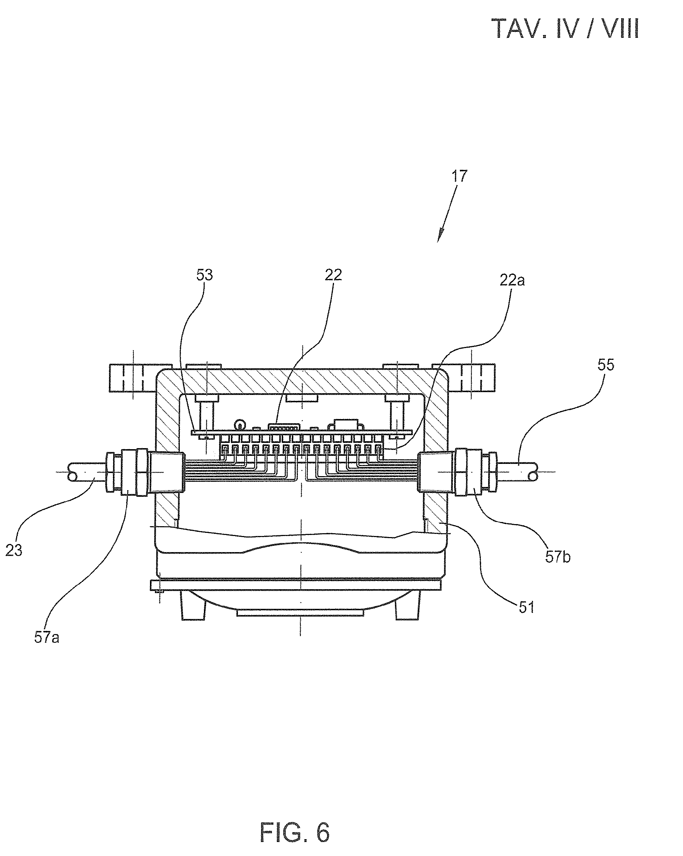

With reference to Fig. 6 there is illustrated the electronic control unit 17 in which the amplifier 21 is housed. According to a preferred embodiment of the invention, the unit 17 houses in its inside an electronic circuit 22 which performs the functions of amplification, interpolation and conditioning of the electric signals originating from the sensor unit 15.

According to the invention, the electronic unit 17 comprises a casing 51 that may be of the common type, when the unit 17 is placed in an area which is not under risk of explosion, or may be of the type homologated for use in a dangerous area for the presence of gases or potentially explosive powders, when said unit 17 is to be placed in an explosion risk area. Therefore, said casing 51, if the unit 17 is of the homologated type, will advantageously be of the type homologated for use within a dangerous area for the presence of potentially explosive gases or powders according to the intended use.

Inside the casing 51, be it of the common or homologated type, there is housed a printed circuit board 53 provided with anchoring clamps 22a for the terminals of the conductors of the cable 23 and there is further contained the electronic circuit 22 for amplifying, interpolating and conditioning the signals originating from the detector device 19 through the homologated cable 23.

The electronic unit 17 is further provided with a signal output cable 55 for transporting the signals of the transducer 11 to the control apparatus for use thereof by an end user.

The cable 23 and the cable 55 come out from the casing 51 through a corresponding cable clamp 57a,57b that may be of the normal type or of the type homologated for use within dangerous areas for the presence of gases or potentially explosive powders, depending on the configuration of the casing 51.

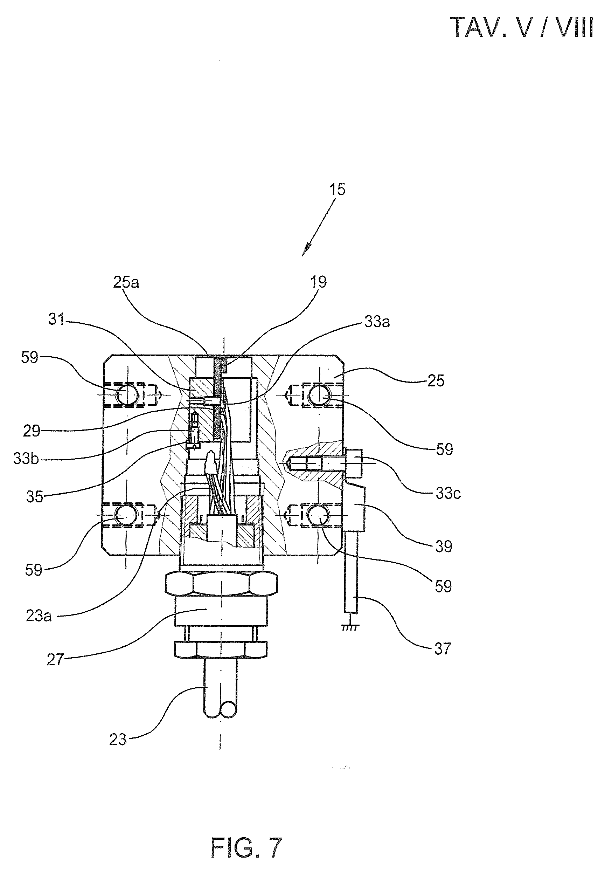

With reference to Fig. 7 there is illustrated a second embodiment of the sensor unit 15, wherein the casing 25 of said unit comprises a substantially parallelepipedal shape and is provided on its outside with a plurality of threaded seats 59 for the passage of fixing screws of said casing 25.

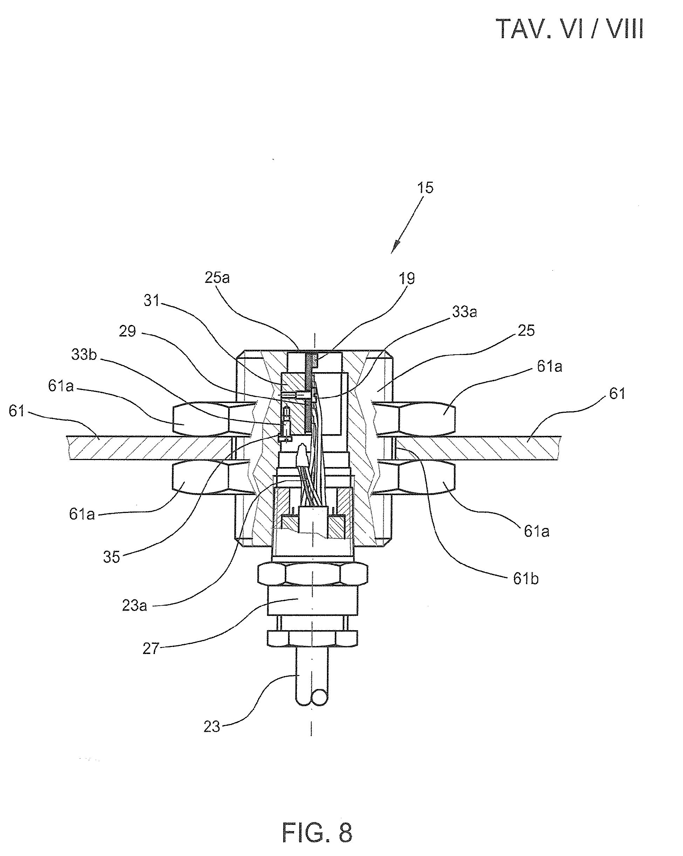

With reference to Fig. 8 there is illustrated a third embodiment of the sensor unit 15, wherein the casing 25 of said unit comprises a cylindrical shape and is threaded on its outside. Thanks to this arrangement it is possible to fix the unit 15 by screwing it into an appropriate seat 61 provided with a corresponding inner hole 61b and the casing 25 may be blocked within said seat by means of hexagonal threaded nuts 61a.

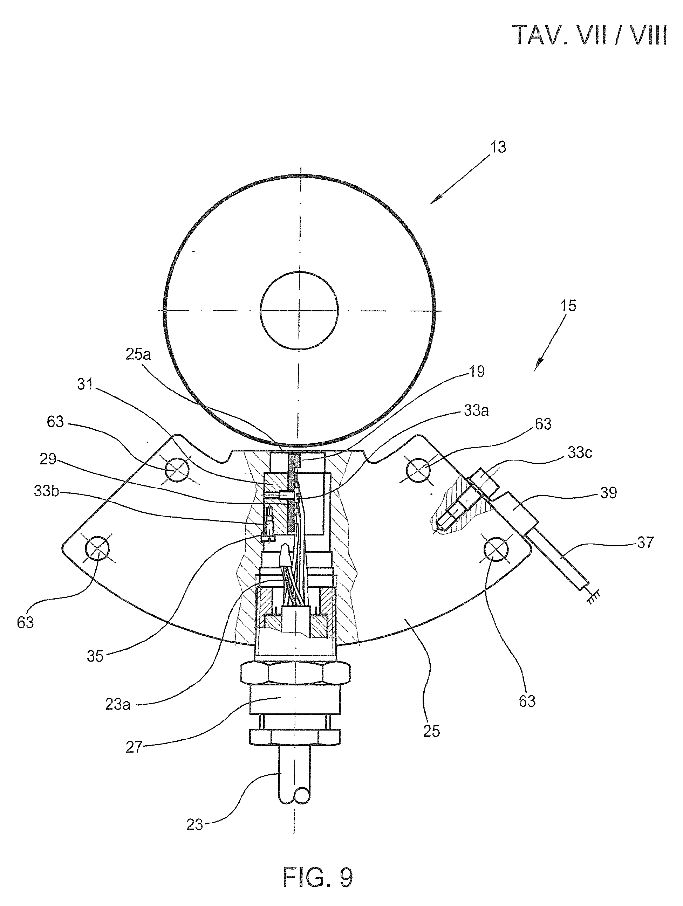

With reference to Fig. 9 there is illustrated a fourth embodiment of the sensor unit 15, wherein the casing 25 comprises a substantially half-moon shape, or comprises a half-moon-shaped portion, and is therefore suitable for being mounted on the motor breeches so as to partially surround the magnetic unit 13 consisting of a corresponding magnetic disk. The fixing of the casing 25 is effected by means of screws passing through the holes 63 and engaged in threaded seats provided on the motor breech.

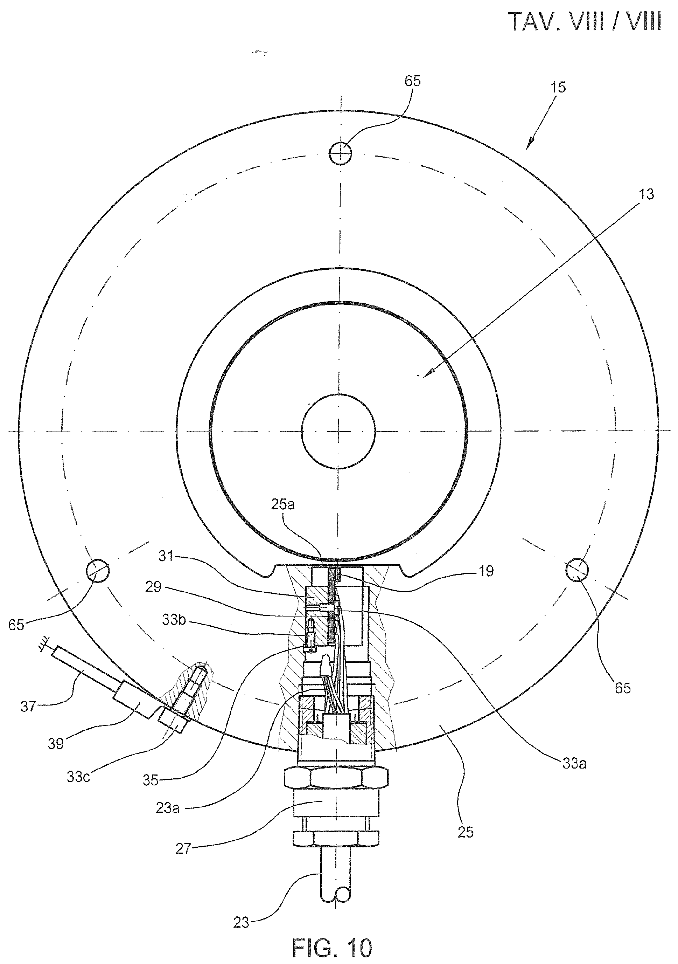

With reference to Fig. 10 there is illustrated a fifth embodiment of the sensor unit 15, wherein the casing 15 comprises a substantially circular shape, or comprises an annular crown shape, and is therefore suitable for being mounted on the motor breeches so as to completely surround the magnetic unit 13 consisting of a magnetic disk. The fixing of the casing 25 is effected by means of screws passing through the holes 65 and engaged in threaded seats provided on the motor breech.

The transducer as described and illustrated can be subject to several variants and modifications falling within the same inventive principle.

## Claims

1. Explosion-proof magnetic transducer (11) comprising a magnetic unit (13), a sensor unit (15) and an electronic control unit (17), wherein the magnetic unit (13) is associatable to a body moving circularly or rectilinearly or according to a combination of these movements, wherein the sensor unit (15) comprises a detector device (19) capable of causing the variation of at least one electrical quantity in an electric signal passing through said device, upon variation of the magnetic flux in a surrounding magnetic field, wherein the electronic control unit (17) comprises an amplifier (21) of the amplitude of said electric signal, wherein when the transducer (11) is working the electric power absorbed by said sensor unit (15) is lower than the one absorbed by said electric control unit (17) and wherein said sensor unit (15) and said control unit (17) are housed in separate casings (25, 51) and are connected by an electric cable (23), the sensor unit (15) being housed in a casing (25) from where the cable (23) connecting the electric control unit (17) comes out, **characterized in that** the wall of said casing (25) at the detector device (19) has such a thickness that the distance of the head of the detector device (19) from the external face of the wall of said casing (25) is lower than 1.0 mm and **in that** the remaining walls of the casing (25) have a thickness comprised between 3 and 5 mm, whereby a portion with reduced thickness is provided at the detector device (19) only, in order to allow said device to work correctly upon variation of the magnetic field generated by the magnetic unit (13).

2. Transducer according to claim 1, wherein said detector device (19) consists of a magneto-resistive or Hall effect head.

3. Transducer according to claim 1 or 2, wherein the wall of said casing at the detector device (19) has such a thickness that the distance of the head of the detector device (19) from the external face of the wall of said casing (25) is of about 0.5 to 0.6 mm.

4. Transducer according to claim 1 or 2 or 3, wherein the detector device (19) is a device with low power absorption < 100 mW and low feeding voltage < 5V.

5. Transducer according to claim 4, wherein the volume inside the casing (25) of the sensor unit (15) is filled with hardenable insulating material (29a), e.g. epoxy or silicone or polyurethane resin or other suitable binders/resins, to protect the printed circuit board (29) and the device (19) against shocks, vibrations and possible condensation phenomena.

6. Transducer according to any of the preceding claims, wherein the magnetic unit (13) comprises a magnetic ring (43), or a magnetic gear or a linear magnetic band, magnetized with equally alternated N/S poles.

7. Transducer according to any of the preceding claims, wherein the electronic control unit (17) houses in its inside an electronic circuit (22) performing the functions of amplifying, interpolation and conditioning of the electric signals originating from the sensor unit (15).

8. Transducer according to any of the preceding claims, wherein the electronic unit (17) comprises a common type casing (51) when the control unit (17) is intended to be used within an area which is not under risk of explosion, or a casing certified for use within a dangerous area for the presence of potentially explosive gases or powders, when said unit (17) is intended to be placed in an explosion risk area.

9. Transducer according to claim 7 or 8, wherein the electronic unit (17) is further provided with an output cable (55) for transporting the signals of the transducer (11) to a control apparatus for use thereof by an end user.

10. Transducer according to any of the preceding claims, wherein the casing (25) of the sensor unit (15) comprises a substantially half-moon or annular crown shape, suitable to be mounted on the motor breeches so as to surround completely or partially, respectively, the magnetic unit (13) comprising a disk associated with the rotating motor shaft.

## Patentansprüche

1. Explosionsgeschützter magnetischer Signalgeber (11) mit einer magnetischen Einheit (13), einer Sensoreinheit (15) und einer elektronischen Steuereinheit (17), wobei die magnetische Einheit (13) einem Körper zugeordnet werden kann, der sich kreisförmig oder geradlinig oder gemäß einer Kombination dieser beiden Bewegungen bewegt, wobei die Sensoreinheit (15) eine Detektorvorrichtung (19) aufweist, die dazu in der Lage ist, die Variation von wenigstens einer elektrischen Größe in einem elektrischen Signal, das durch diese Vorrichtung läuft, bei einer Variation des magnetischen Flusses in einem umgebenden Magnetfeld zu bewirken, wobei die elektronische Steuereinheit (17) einen Verstärker (21) der Amplitude des elektrischen Signals aufwiest, wobei wenn der Signalgeber (11) arbeitet, die von der Sensoreinheit (15) aufgenommene elektrische Leistung kleiner ist als die von der elektronischen Steuereinheit (17) absorbierte Leistung, und wobei die Sensoreinheit (15) und die Steuereinheit (17) in verschieden Gehäusen (15, 51) angeordnet sind und über ein elektrisches Kabel (23) miteinander verbunden sind, die Sensoreinheit (15) in einem Gehäuse (25) angeordnet ist, aus dem das Kabel (23), welches die elektrische Steuereinheit (17) anschließt, herauskommt, **dadurch gekennzeichnet, dass** die Wand dieses Gehäuses (25) an der Detektorvorrichtung (19) eine solche Stärke hat, das der Abstand des Kopfs der Detektorvorrichtung (19) von der äußeren Seite der Wand des Gehäuses (25) kleiner als 1,0 mm ist und, dass die übrigen Wände des Gehäuses (25) eine Stärke haben, die zwischen 3 und 5 mm beträgt, wobei ein Abschnitt mit reduzierter Stärke an der Detektorvorrichtung (19) nur vorgesehen ist, damit die Vorrichtung bei Variation des Magnetfelds, das von de magnetischen Einheit (13) erzeugt wird, korrekt arbeiten kann.

2. Signalgeber nach Anspruch 1, wobei die Detektorvorrichtung (19) einen magnetoresistiven Kopf oder einen Hall-Effekt Kopf aufweist.

3. Signalgeber nach Anspruch 1 oder 2, wobei die Wand des Gehäuses an der Detektorvorrichtung (19) eine solche Stärke hat, dass der Abstand des Kopfs der Detektorvorrichtung (19) von der äußeren Seite der Wand des Gehäuses (25) etwa 0,5 bis 0,6 mm beträgt.

4. Signalgeber nach Anspruch 1 oder 2 oder 3, wobei die Detektorvorrichtung (19) eine Vorrichtung mit einer geringen Leistungsaufnahme < 100 mW und einer geringen Versorgungsspannung < 5 V ist.

5. Signalgeber nach Anspruch 4, wobei das Volumen in dem Gehäuse (25) der Sensoreinheit (15) mit aushärtbarem Isoliermaterial (29a) z.B. Epoxid- oder Silikon- oder Polyurethanharz oder anderen geeigneten Bindern/Harzen aufgefüllt wird, um die gedruckte Leiterplatte (29) und die Vorrichtung (19) vor Erschütterungen, Schwingungen und eventuellen Kondensationserscheinungen zu schützen.

6. Signalgeber nach einem der vorstehenden Ansprüche, wobei die magnetische Einheit (13) einen magnetischen Ring (43) oder ein magnetisches Zahnrad oder lineares magnetisches Band aufweist, das mit alternierenden N/S Polen gleichmäßig magnetisiert ist.

7. Signalgeber nach einem der vorstehenden Ansprüche, wobei die elektronische Steuereinheit (17) in ihrem Inneren eine elektronische Schaltung (22) enthält, welche Verstärkungs- Interpolations- und Aufbereitungsfunktionen der elektrischen Signale erfüllt, die von der Sensoreinheit (15) ausgehen.

8. Signalgeber nach einem der vorstehenden Ansprüche, wobei die elektronische Einheit (17) ein gewöhnliches Gehäuse (51) aufweist, wenn die Steuereinheit (17) dafür vorgesehen ist, in einem Gebiet verwendet zu werden das nicht explosionsgefährdet ist, oder ein Gehäuse aufweist, das zur Benutzung in gefährlichen Gegenden in Anwesenheit möglicherweise explosiver Gase oder Pulver zertifiziert ist, wenn die Einheit (17) dafür vorgesehen ist, in einem explosionsgefährdeten Gebiet eingesetzt zu werden.

9. Signalgeber nach Anspruch 7 oder 8, wobei die elektronische Einheit (17) zudem mit einem Ausgangskabel (55) zum Transportieren der Signale des Signalgebers (11) zu einer Steuereinrichtung zum Gebrauch derselben durch einen Anwender versehen ist.

10. Signalgeber nach einem der vorstehenden Ansprüche, wobei das Gehäuse (25) der Sensoreinheit (15) eine im wesentlichen halbmond-förmige Gestalt oder eine Gestalt einer Ringkrone aufweist, welche dafür geeignet ist, auf Motorverschlüssen montiert zu werden, sodass die magnetische Einheit (13), die eine der drehenden Motorwelle zugeordnete Scheibe aufweist, vollständig bzw. teilweise umgeben ist.

## Revendications

1. Transducteur magnétique antidéflagrant (11) comprenant une unité magnétique (13), une unité de capteur (15) et une unité de commande électronique (17), dans lequel l'unité magnétique (13) peut être associée à un corps se déplaçant de façon circulaire ou de façon rectiligne ou selon une combinaison de ces mouvements, dans lequel l'unité de capteur (15) comprend un dispositif détecteur (19) capable de provoquer la variation d'au moins une quantité électrique dans un signal électrique passant par ledit dispositif, lors de la variation du flux magnétique dans un champ magnétique environnant, dans lequel l'unité de commande électronique (17) comprend un amplificateur (21) de l'amplitude dudit signal électrique, dans lequel, lorsque le transducteur (11) fonctionne, la puissance électrique absorbée par ladite unité de capteur (15) est inférieure à celle absorbée par ladite unité de commande électrique (17), et dans lequel ladite unité de capteur (15) et ladite unité de commande (17) sont logées dans des boîtiers (25, 51) séparés et sont connectés par un câble électrique (23), l'unité de capteur (15) étant logée dans un boîtier (25) d'où sort le câble (23) connectant l'unité de commande électrique, **caractérisé en ce que** la paroi dudit boîtier (25) au niveau du dispositif détecteur (19) a une épaisseur telle que la distance entre la tête du dispositif détecteur (19) et la face externe de la paroi dudit boîtier (25) est inférieure à 1,00 mm et **en ce que** les parois restantes du boîtier (25) ont une épaisseur comprise entre 3 et 5 mm, moyennant quoi une portion d'épaisseur réduite est prévue au niveau du dispositif détecteur (19) uniquement, afin de permettre audit dispositif de fonctionner correctement lors de la variation du champ magnétique généré par l'unité magnétique (13).

2. Transducteur selon la revendication 1, dans lequel ledit dispositif détecteur (19) est constitué d'une tête à magnéto-résistance ou à effet Hall.

3. Transducteur selon la revendication 1 ou 2, dans lequel la paroi dudit boîtier au niveau du dispositif détecteur (19) a une épaisseur telle que la distance entre la tête du dispositif détecteur (19) et la face externe de la paroi dudit boîtier (25) est d'environ 0,5 mm à 0,6 mm.

4. Transducteur selon la revendication 1 ou 2 ou 3, dans lequel le dispositif détecteur (19) est un dispositif à faible absorption de puissance < 100 mW et à faible tension d'alimentation < 5V.

5. Transducteur selon la revendication 4, dans lequel le volume à l'intérieur du boîtier (25) de l'unité de capteur (15) est rempli de matériau isolant durcissable (29a), par exemple de résine époxy ou silicone ou polyuréthane ou d'autres liants/résines appropriés, afin de protéger la carte de circuit imprimé (29) et le dispositif (19) de chocs, de vibrations et de possibles phénomènes de condensation.

6. Transducteur selon l'une quelconque des revendications précédentes, dans lequel l'unité magnétique (13) comprend un anneau magnétique (43), ou un engrenage magnétique ou une bande magnétique linéaire, aimanté avec des pôles N/S alternés de façon égale.

7. Transducteur selon l'une quelconque des revendications précédentes, dans lequel l'unité de commande électronique (17) loge en son sein un circuit électronique (22) réalisant les fonctions d'amplification, d'interpolation et de conditionnement des signaux électriques provenant de l'unité de capteur (15).

8. Transducteur selon l'une quelconque des revendications précédentes, dans lequel l'unité électronique (17) comprend un boîtier (51) de type courant lorsque l'unité de commande (17) est destinée à être utilisée dans une zone qui n'est pas à risque d'explosion, ou un boîtier certifié pour une utilisation dans une zone dangereuse en raison de la présence de gaz ou de poudres potentiellement explosifs, lorsque ladite unité (17) est destinée à être placée dans une zone à risque d'explosion.

9. Transducteur selon la revendication 7 ou 8, dans lequel l'unité électronique (17) est en outre pourvue d'un câble de sortie (55) permettant de transporter les signaux du transducteur (11) vers un appareil de commande pour son utilisation par un utilisateur final.

10. Transducteur selon l'une quelconque des revendications précédentes, dans lequel le boîtier (25) de l'unité de capteur (15) comprend une forme sensiblement de demi-lune ou de couronne annulaire, appropriée pour être montée sur les culasses du moteur de façon à entourer complètement ou partiellement, respectivement, l'unité magnétique (13) comprenant un disque associé à l'arbre de moteur rotatif.
